# NEW EUROPEAN PATENT SPECIFICATION

(11) **EP 0 306 040 B2**
(45) Date of publication and mention of the opposition decision: **27.03.1996**
(45) Mention of the grant of the patent: 29.04.1992
(21) Application number: 88114352.3
(22) Date of filing: 02.09.1988
(51) Int. Cl.: F16F 9/04

(54) **Improved air-spring, in particular for the use under extreme conditions**
Luftfeder, insbesondere für aussergewöhnliche Gebrauchsbedingungen
Ressort pneumatique, en particulier pour utilisation dans des conditions extrêmes

(30) Priority: 02.09.1987 HU 393087
(43) Date of publication of application: 08.03.1989
(73) Proprietor: TAURUS GUMIIPARI VALLALAT, Budapest VIII (HU)
(72) Inventor: Fehérdy, István, H-1024 Budapest (HU); Farkas, Ottó, H-1025 Budapest (HU); Havasi, Gábor, H-1163 Budapest (HU)
(74) Representative: Füchsle, Klaus, Dipl.-Ing.

(56) References cited:
- DE-B- 1 257 026
- DE-B- 1 285 792
- DE-C- 1 066 440
- DE-U- 7 213 478
- US-A- 3 130 965
- Brochüre Continental "Luftfederbälge", 1968, pages 3, 46, 52

## Description

The present invention relates to an improved air-spring according to the preamble of independent claims 1 and 2.

A corresponding air-spring is disclosed in DE-B-1 257 026. A further air-spring with a diaphragm fixed to a closing element by overlapping fitting, said diaphragm being made of rubber or any synthetic material similar to rubber and being provided with a strength carrier insert and having on one or both ends flanges reinforced with steel wire is known for example from US-A-3,130,965.

As it is well known, air-springs consist generally of a diaphragm made of rubber-textile material which is capable for deformation, and of a metal armature, the closing element, connected thereto and providing airtight closure. The function of the closing element is to fix the air-spring to the springing body (e.g. a vehicle) and simultaneously assure inlet and outlet of the actuating air. Airtight closure is to be established between the flanges of the diaphragm and the closing element so, as to be able to maintain increased pressure caused by springing in the full length of the spring path, i.e. to achieve airtight closure even upon the effect of tensile forces upon the extreme release of springs.

Several solutions have been proposed for the formation of the system consisting of the closing element and the diaphragm.

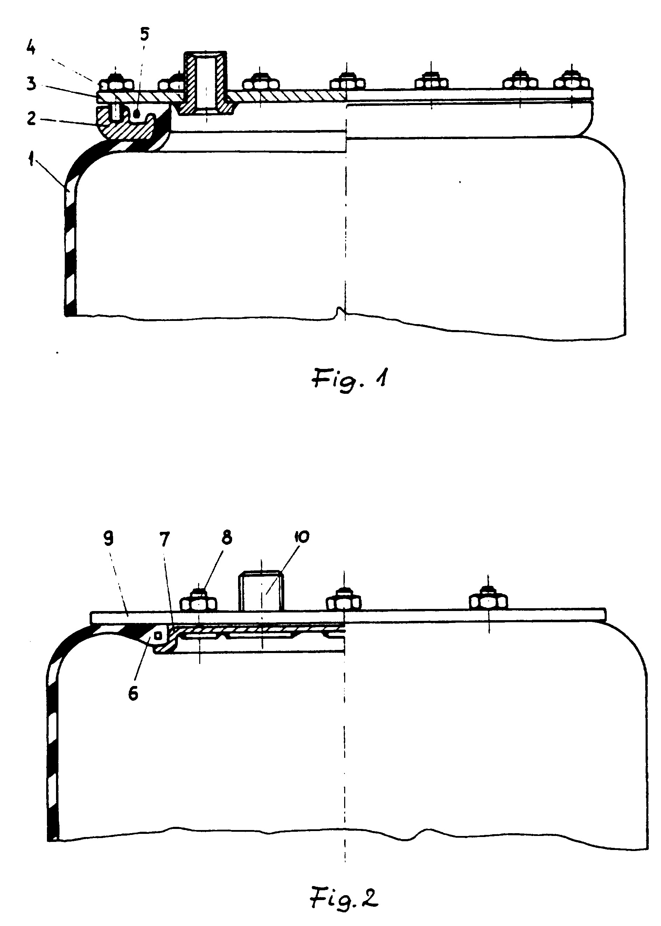

With one type of known air-springs the flanges of the diaphragm are fixed between the two metal parts by the compressive force of screws. Such a solution is to be seen in Fig. 1 and 2, wherein compressive force provides a hermetic sealing and keeps the flange of the diaphragm in the proper position.

Figure 1 shows the clamped flange of the diaphragm of an air-spring and the way of assembly for achieving hermetic sealing, in a semi-sectional view.

With the solution known from practical manufacture - having been spread in all world - the flange of diaphragm 1 is fitted into the properly shaped part of a closing element 2. This operation is rather wearisome due to a vulcanized marginal wire 5, thereafter the fixing lid 3 is fitted onto the screws contained in the closing element 2 - the number of which amounts to at least eight -, the closing lid contains also the connection for air, and it is fixed by means of nuts. After having screwed the nuts with the proper torque, sealing is established on the desired place.

Figure 2 is a semi-sectional view of a solution well-known from practice, in which hermetic closing is obtained by means of screws. A part of the air-spring, similarly to the illustration according to figure 1 is shown in a half-view and half-section. In comparison to figure 1 the essential difference is that the diaphragm-flange 6 is turned by 180° in relation to the flange of the diaphragm 1. Considering that the flange 6 is fitting to the closing element along a shorter periphery, than the diaphragm 1, the number of the fixing screws 8 of the closing element 7 is less (1 to 4 pieces) and the tolerance of the production is not so strict. Arrangement of the fixing lid 9 and air-connection 10 corresponds to that of Figure 1. The drewback of clamping - as to be seen in figs. 1 and 2 - lies in the high costs and in the complicated mounting.

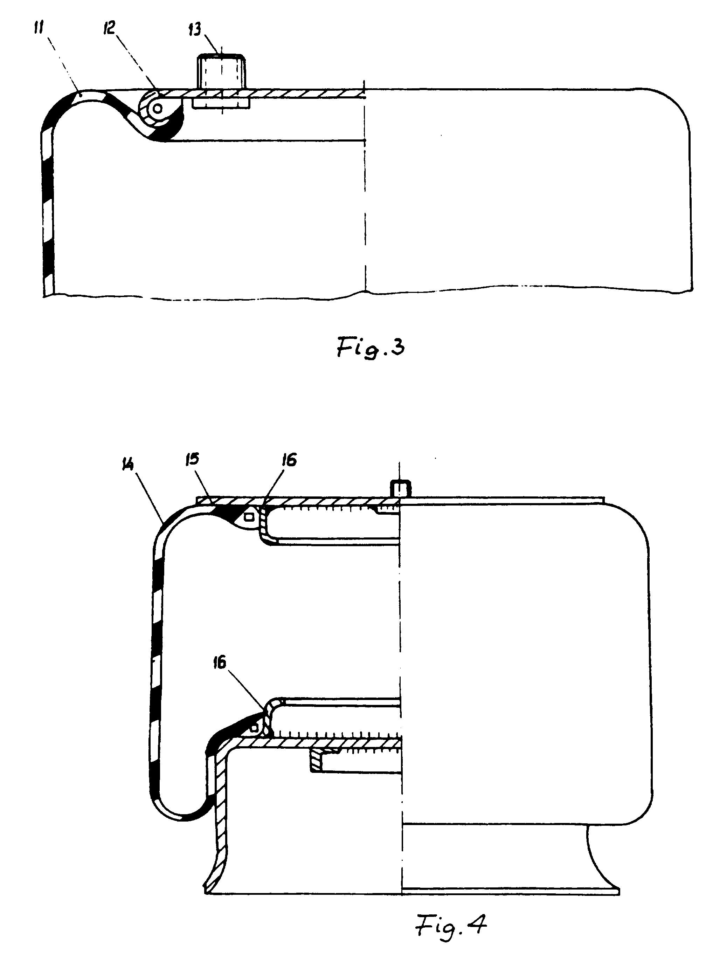

Figure 3 shows the flange part of a ususal air-spring, in a semi-sectional view. In this case formation of the rolling diaphragm 11 corresponds to that of Figure 1, wherein the lid is not installed by screws, but it is a compressed (flanged) lid 12. That means that the diaphragm cannot be disassembled when it becomes damaged, and the lid 12 must be thrown out together with the air-connection 13 thereon and all the other fittings and connections.

Figure 4 illustrates a formation of the flange which is generally used. The Figure is a semi-sectional view of the whole air-spring and the hermetic flange-part as well. The flange of the diaphragm 14 is pulled onto the profiled ring 16 which is welded onto the fixing lid 15. In this case airtight sealing is obtained by dimensional overlapping, while resistance to downwards motion of the flange of the diaphragm can be achieved only by the adhesion of the close fitting (overlapping) of the conical surfaces. This solution can be easily assembled, however, in an extreme springing position the diaphragm may slid down easily from the profiled ring 16.

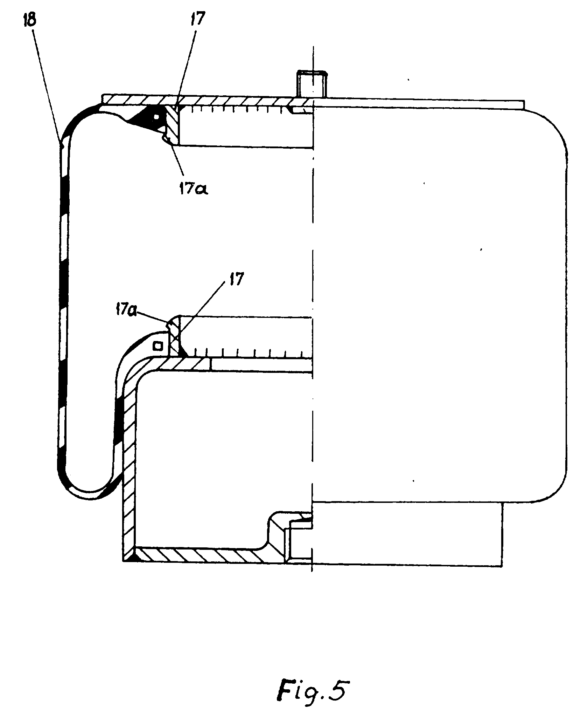

Figure 5 is a semi-sectional view of a known air-spring, illustrating a frequently used method for fitting the flanges and metal parts. In this case too - as specified in connection with Fig. 4 - an airtight closure is obtained on the conical surfaces of the metal and the flange of the diaphragm, establishing a proper overlapping. The extent of overlapping and the cone angle influence possibility of assembly, airtightness and pulling force (that means the force, which is needed for removing the diaphragm from the metal part). To obtain proper overlapping and fitting, respectively, most accurate processing is necessary. However, even with the highest accuracy, problems may arise in connection with the resistance to pull-down forces. Solutions, with which a nose-part is formed on the conical surface in order to provide resistance to sliding down, are aimed at the solution of said problem.

From Figure 5 it is obvious that the locking ring 17 is provided with the nose-part 17a preventing back-slide of the diaphragm 18. Accordingly, sliding-up of the flanges of the diaphragm 18 requires a far higher inner overpressure, than e.g. positioning of the marginal ring according to figure

4. Prevention of back-slide of the flange 18 is of extrem importance also with diaphragms operated at low pressure. The advantage of the nose-part 17a lies in that it prevents back-slide of the diaphragm at air-springs operated in extreme positions (e.g. in complete release of springs).

It is disadvantageous, that the nose-part 17a requires a most accurate processing (it can be formed only with expensive cutting), and at the same time the mounting requires special tools and high internal pressure.

The mode of fixation according to Figure 5, i.e. combined application of flange-formation and of the ring with the nose-like cross-section, represents the prior art, as it is described DE-A-3 246 599.

Further modes of fixation results in unreleasable bonds between diaphragm, closing element and sometimes the piston (see e.g. DE-A-3 246 599). As a consequence, when rubber becomes damaged, the whole construction is to be thrown away, which is uneconomical and dangerous to the environment.

The object of the invention is to eliminate deficiencies of known solutions, that means to provide an exchangable diaphragm of the air-spring, to prevent back-slide in course of use and to achieve a proper airtightness. A further object is to lower production costs of the metal part and to enable simple mounting.

This object is solved by the features of claim 1 and by the features of independent claim 2. The strength of the bond of the air-spring according to claim 2 is further increased compared to the air-spring according to claim 1.

The essence of the invention is a flange-disc construction of an air-spring which enables better utilization of the possibilities concealed in the elasticity of the known flange of the diaphragm for achieving proper airtightness.

Essential feature of the invention is that by using a flange-disc and a diaphragm with expediently shaped flange,savings in production costs and far improved airtightness can be achieved in comparison to usual air-springs, and further, mounting can be carried out with a more simple technology and repair becomes more economical.

When fixing the flange of the air-spring according to the invention the flange is divided in functional zones:
- Zone A: is a surface capable of considerable deformation; by virtue of its elasticity the sealing is achieved;
- Zone B: is a surface supported by marginal steel wire; as a consequence, stable fitting and tightness of the diaphragm is assured;
- Zone C: is a decompressive surface, fitting to the metal surface of the section of the diaphragm-flange which is pressed through the maximum diameter of the metal part, having a reducing diameter; its resistance to back-slide is proportional with labour intensity of repeated compression.

For the sake of better compression the air-spring according to the invention will now be described by way of example with reference to the accompanying drawings in which:
- Figures 1-5: show solutions according to the prior art, as cited in the preamble;
- Figure 6: is a fragmentary sectional view of an advantageous embodiment of the invention;
- Figure 7: is a semi-sectional view of a second embodiment of the invention;
- Figure 8: is a sectional view of a third embodiment of the invention.

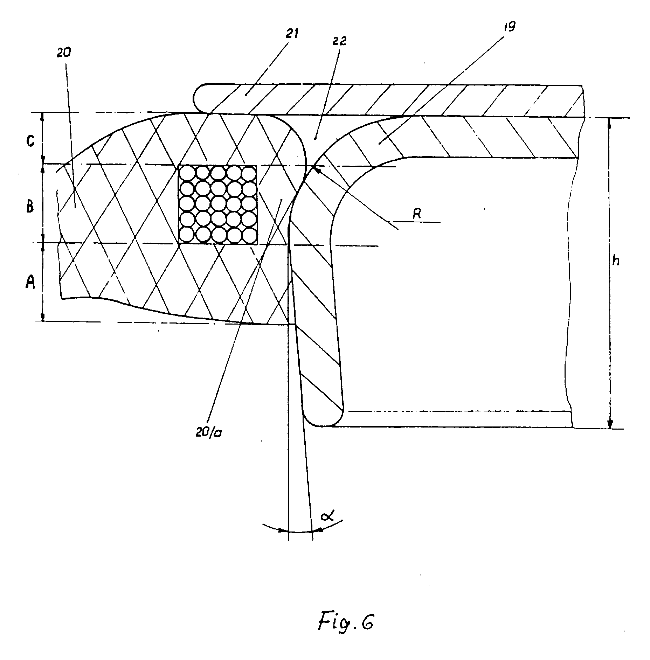

As shown in Fig. 6, a flanged disc 19 and an impact surface 21 is interconnected by welding or gluing. The flanged disc represents a characteristic component of the metal fittings, which can be formed easily by deepdrawing. A diaphragm 20 is installed onto the conical surface of the flanged disc 19 by an inner air-pressure, upon the effect of which the rubber rim of a flange 20a of the diaphragm 20 becomes deformed, a part of the flange 20a of the diaphragm 20 slides above the maximum diameter of the flanged disc 19 and snaps into an empty space 22 formed by the part with reducing diameter defined by the radius R of curvature, as shown in Figure 6. As a matter of fact, in course of assembling the diaphragm, final positioning of the flange 20a take places suddenly and it is mostly accompanied by a cracking sound.

Following the snapping motion, the space between the flange 20a of the diaphragm 20 and the flanged disc 19 can be filled with a raw rubber mixture, vucanized to the surface of the diaphragm 20 so the strength of the bond can be further increased. The outworn diaphragm 20 may be cut, the filling material can be easily removed and the flanged disc 19 can be repeatedly used.

The flange 20a with the flanged disc 19 contained therein assuring airtight closure form collectively a part of the complete air-spring. The flanged disc 19 can be mounted onto the other metal parts by means of a screwed connection or by welding, it may be glued thereto or any other mode of connection can be applied.

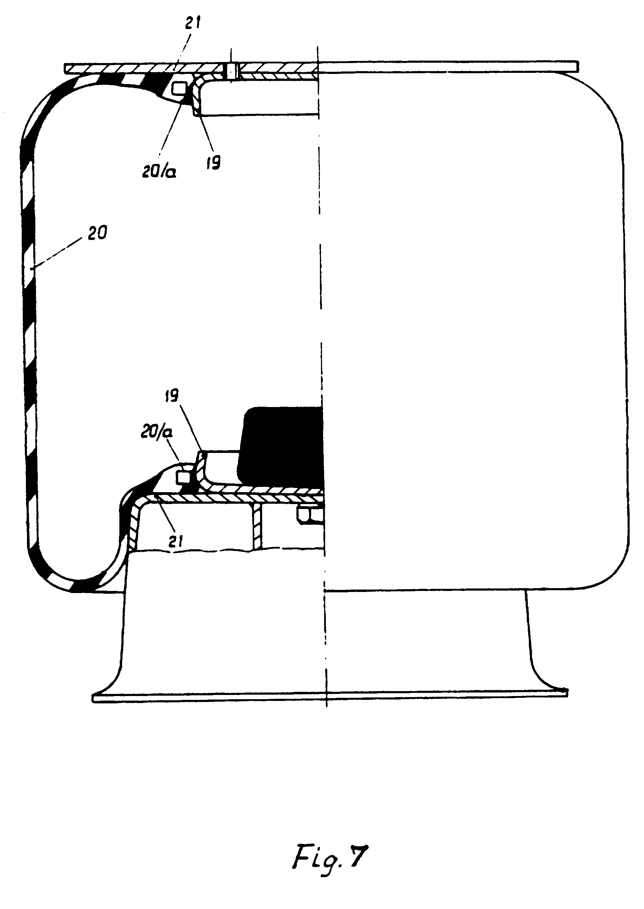

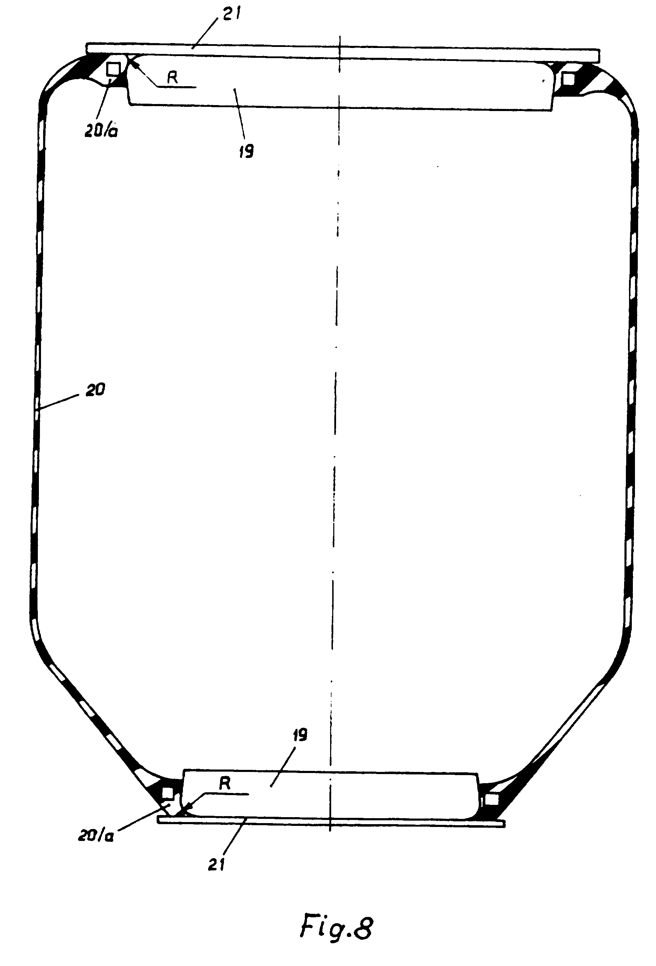

Figures 7 and 8 illustrate the flanges 20a fixed to the disc-plate 19. Both ends of the rolling diaphragm are provided with flanged discs 19 which can be equally dimensioned (figure 7) or their diameter can be different (figure 8). Said flanged discs 19 are connected releasably with the cloth-insert of the flanges 20a of the diaphragm 20 and the rubber, respectively, accordingly undesired stresses do not occur in the rubber containing the cloth-insert. The flanges 20a of the diaphragms enable reliable function even in a loaded state.

The rolling diaphragm 20 according to figure 7 is made of a rubber mixture reinforced with textile; it may have a conical or cylindrical shape. The diaphragm 20 is provided with flanges 20a having equal or different diameters. Said flanges 20a are facing the symmetry axis of the diaphragm 20.

As it becomes obvious, a part of the flange 20a of the diaphragm 20 of the air-spring is arranged in the space 22 on the flange-disc, in such a manner extra force needed for the resistance to pulling-down can be obtained which is added to the forces resulting from overlapping and internal pressure.

Expediently introducing cone angle of the flange-disc 19 is to be adjusted so, that half-aperture angle a thereof is between 3° and 7°, while the height of the flange-disc 19, that means the length h of the perpendicular line measured from the impact surface 21 fixed thereto, is 2 to 4 times longer than the radius R of curvature.

## Claims

1. Air-spring with a diaphragm (20) fixed to a closing element by overlapping fitting, said diaphragm (20) being made of an elastic material, on one end of the diaphragm (20) the closing element being a cylinder-symmetrical flanged disc (19) which has a flange on which a flange (20a) of said diaphragm is mounted, said flange of said flanged disc (19) having an introductory portion for mounting the diaphragm, said introductory portion having a continuously increasing external diameter and being followed by a portion of reduced external diameter, an impact surface (21) being provided to ensure proper positioning and airtightness of the diaphragm,
**characterized in that**
- said diaphragm (20) is provided with a strength carrier insert and has on one or both ends flanges (20a) reinforced with steel wire or any other suitable wire,
- according to an alternative, the overlapping fitting of the diaphragm and the closing element is provided not only on one end but on both ends of the diaphragm,
- the flanged disc (19) is made of sheet-material processed expediently by the technology of sheet-deformation,
- the diaphragm is made of rubber or any synthetic material similar to rubber, and
- said impact surface (21) defines together with said portion of said flanged disc (19) having a reduced external diameter and together with the properly positioned diaphragm (20)a closed annular empty space (22).

2. Air-spring with a diaphragm (20) fixed to a closing element by overlapping fitting, said diaphragm (20) being made of an elastic material, on one end of the diaphragm (20) the closing element being a cylinder-symmetrical flanged disc (19) which has a flange on which a flange (20a) of said diaphragm is mounted, said flange of said flanged disc (19) having an introductory portion for mounting the diaphragm, said introductory portion having a continuously increasing external diameter and being followed by a portion of reduced external diameter, an impact surface (21) being provided to ensure proper positioning and airtightness of the diaphragm,
**characterized in that**
- said diaphragm (20) is provided with a strength carrier insert and has on one or both ends flanges (20a) reinforced with steel wire or any other suitable wire,
- according to an alternative, the overlapping fitting of the diaphragm and the closing element is provided not only on one end but on both ends of the diaphragm,
- the flanged disc (19) is made of sheet-material processed expediently by the technology of sheet-deformation,
- the diaphragm is made of rubber or any synthetic material similar to rubber, and
- said impact surface (21) defines together with said portion of said flanged disc (19) having a reduced external diameter and together with the properly positioned diaphragm (20) a closed annular space (22) which is filled with raw rubber or an elastic adhesive.

3. Air-spring according to one of the preceding claims,
**characterized in that**
both the introductory portion of said flanged disc (19) having an increasing external diameter and said portion having a reduced external diameter continuing up to the impact surface (21) are conically shaped.

4. Air-spring according to one of the preceding claims,
**characterized in that**
the half-aperture angle (α) of the introductory portion of said flanged disc (19) is between 3° and 7°, while the height (h) of said flanged disc (19) measured from the impact surface (21) is 2 to 4 times longer than the radius (R) of curvature of the external surface of the curved portion of said flanged disc at the part with reducing diameter.

## Patentansprüche

1. Luftfeder mit einer Membran (20), die an einem Verschlußelement durch überlappende Passung befestigt ist, wobei die Membran (20) aus einem elastischen Material hergestellt ist, wobei an einem Ende der Membran (20) das Verschlußelement eine zylindersymmetrische, geflanschte Scheibe (19) ist, die einen Flansch aufweist, an dem ein Flansch (20a) der Membran montiert ist, wobei der Flansch der geflanschten Scheibe (19) einen einleitenden Abschnitt zur Montage der Membran aufweist, der einen sich kontinuierlich vergrößernden Außendurchmesser hat und an den sich ein Bereich mit reduziertem Außendurchmesser anschließt, wobei eine Anschlagfläche (21) vorgesehen ist, die eine richtige Positionierung und Luftdichtheit der Membran sicherstellt,
**dadurch gekennzeichnet,** daß
- die Membran (20) mit einem Verstärkungsträgereinsatz versehen ist und an einem Ende oder an beiden Enden mit Stahldraht oder einem anderen geeigneten Draht verstärkt ist,
- gemäß einer Alternative, die überlappende Passung der Membran und des Verschlußelementes nicht nur an einem Ende, sondern an beiden Enden der Membran vorgesehen ist,
- die geflanschte Scheibe (19) aus flächigem Material hergestellt ist, das durch die Technologie der Flächenverformung geeignet verarbeitet ist,
- die Membran aus Gummi oder irgendeinem anderen gummiähnlichen synthetischen Material hergestellt ist, und
- die Anschlagfläche (21) zusammen mit dem Abschnitt der geflanschten Scheibe (19) mit verringertem Außendurchmesser und zusammen mit der richtig positionierten Membran (20) einen geschlossenen, ringförmigen und leeren Raum (22) festlegt.

2. Luftfeder mit einer Membran (20), die an einem Verschlußelement durch überlappende Passung befestigt ist, wobei die Membran (20) aus einem elastischen Material hergestellt ist, wobei an einem Ende der Membran (20) das Verschlußelement eine zylindersymmetrische, geflanschte Scheibe (19) ist, die einen Flansch aufweist, an dem ein Flansch (20a) der Membran montiert ist, wobei der Flansch der geflanschten Scheibe (19) einen einleitenden Abschnitt zur Montage der Membran aufweist, der einen sich kontinuierlich vergrößernden Außendurchmesser hat und an den sich ein Bereich mit reduziertem Außendurchmesser anschließt, wobei eine Anschlagfläche (21) vorgesehen ist, die eine richtige Positionierung und Luftdichtheit der Membran sicherstellt,
**dadurch gekennzeichnet**, daß
- die Membran (20) mit einem Verstärkungsträgereinsatz versehen ist und an einem Ende oder an beiden Enden mit Stahldraht oder einem anderen geeigneten Draht verstärkt ist,
- gemäß einer Alternative, die überlappende Passung der Membran und des Verschlußelementes nicht nur an einem Ende, sondern an beiden Enden der Membran vorgesehen ist,
- die geflanschte Scheibe (19) aus flächigem Material hergestellt ist, das durch die Technologie der Flächenverformung geeignet verarbeitet ist,
- die Membran aus Gummi oder irgendeinem anderen gummiähnlichen synthetischen Material hergestellt ist, und
- die Anschlagfläche (21) zusammen mit dem Abschnitt der geflanschten Scheibe (19) mit reduziertem Außendurchmesser und zusammen mit der richtig positionierten Membran (20) einen geschlossenen, ringförmigen Raum (22) festlegt, der mit Rohgummi oder einem elastischen Klebstoff gefüllt ist.

3. Luftfeder nach einem der vorstehenden Ansprüche, dadurch gekennzeichnet, daß sowohl der einleitende Abschnitt der geflanschten Scheibe (19) mit sich vergrößerndem Außendurchmesser wie auch der Abschnitt mit reduziertem Außendurchmesser, der sich bis zur Anschlagfläche (21) erstreckt, konisch geformt sind.

4. Luftfeder nach einem der vorstehenden Ansprüche, dadurch gekennzeichnet, daß der halbe Öffnungswinkel (α) des einleitenden Abschnitts der geflanschten Scheibe (19) zwischen 3° und 7° beträgt, während die Höhe (h) der geflanschten Scheibe (19), gemessen von der Anschlagfläche (21), 2 bis 4 mal länger als der Radius (R) der Krümmung der Außenfläche des gekrümmten Abschnitts der geflanschten Scheibe an dem Teil mit reduziertem Durchmesser ist.

## Revendications

1. Ressort pneumatique pourvu d'une membrane (20) fixée à un élément de fermeture par un montage à recouvrement, ladite membrane (20) étant réalisée en matériau élastique, à une extrémité de la membrane (20), l'élément de fermeture étant constitué par un disque à rebord (19) symétriquement cylindrique comportant une bride sur laquelle un rebord (20a) de ladite membrane est monté, ladite bride dudit disque à rebord (19) comportant une partie d'introduction pour le montage de la membrane, ladite partie d'introduction présentant un diamètre extérieur continuellement croissant et étant suivie d'une partie de diamètre extérieur réduit, une surface d'impact (21) étant prévue pour assurer un positionnement et une étanchéité appropriés de la membrane, caractérisé en ce que :
- ladite membrane (20) est pourvue d'un insert support de renforcement et présente à une extrémité ou aux deux, des rebords (20a) renforcés avec du fil d'acier ou un autre fil approprié quelconque,
- le cas échéant, le montage à recouvrement de la membrane et l'élément de fermeture sont prévus non seulement à une extrémité mais aux deux extrémités de la membrane,
- le disque à rebord (19) est réalisé en tôle formée, de façon appropriée, par la technique de déformation de la tôle,
- la membrane est réalisée en élastomère ou en un autre matériau synthétique quelconque similaire à un élastomère, et
- ladite surface d'impact (21) délimite un espace annulaire fermé vide (22) conjointement avec ladite partie dudit disque à rebord (19) présentant un diamètre extérieur réduit, et conjointement avec la membrane (20) positionnée de façon appropriée.

2. Ressort pneumatique pourvu d'une membrane (20) fixée à un organe de fermeture par un montage à recouvrement, ladite membrane (20) étant réalisée en matériau élastique, à une extrémité de la membrane (20) l'élément de fermeture étant constitué par un disque à rebord (19) symétriquement cylindrique comportant une bride sur laquelle un rebord (20a) de ladite membrane est monté, ladite bride dudit disque à rebord (19) comportant une partie d'introduction pour le montage de la membrane, ladite partie d'introduction présentant un diamètre extérieur continuellement croissant et étant suivie d'une partie de diamètre extérieur réduit, une surface d'impact (21) étant prévue pour assurer un positionnement et une étanchéité appropriés de la membrane, caractérisé en ce que :
- ladite membrane (20) est pourvue d'un insert support de renforcement et présente à une extrémité ou aux deux, des rebords (20a) renforcés avec du fil d'acier ou un autre fil approprié quelconque,
- le cas échéant, le montage à recouvrement de la membrane et l'élément de fermeture sont prévus non seulement à une extrémité mais aux deux extrémités de la membrane,
- le disque à rebord (19) est réalisé en tôle formée, de façon appropriée, par la technique de déformation de la tôle,
- la membrane est réalisée en élastomère ou en un autre matériau synthétique quelconque similaire à un élastomère, et
- ladite surface d'impact (21) délimite conjointement avec ladite partie dudit disque à rebord (19) présentant un diamètre extérieur réduit, et conjointement avec la membrane (20) positionnée de façon appropriée, un espace annulaire fermé (22) qui est rempli d'élastomère cru ou d'un adhésif élastique.

3. Ressort pneumatique selon l'une quelconque des revendications précédentes, caractérisé en ce que, à la fois la partie d'introduction dudit disque à rebord (19) présentant un diamètre extérieur croissant et ladite partie présentant un diamètre extérieur réduit se prolongeant jusqu'à la surface d'encastrement (21), présentent une forme conique.

4. Ressort pneumatique selon l'une quelconque des revendications précédentes, caractérisé en ce que le demi-angle d'ouverture (alpha) de ladite partie d'introduction dudit disque à rebord (19) est compris entre 3° et 7°, tandis que la hauteur (h) dudit disque à rebord (19) mesurée à partir de la surface d'impact (21) est deux à quatre fois plus grande que le rayon de courbure (R) de la surface extérieure de la partie incurvée dudit disque à rebord au niveau de la partie de diamètre réduit.
